# EUROPEAN PATENT SPECIFICATION

(11) **EP 4 470 370 B1**
(45) Date of publication and mention of the grant of the patent: **25.03.2026**
(21) Application number: 24170602.7
(22) Date of filing: 16.04.2024
(51) Int. Cl.: A01K 31/14, E04D 1/30

(54) **RIDGE END CAP OR RIDGE END BLOCK TILE**
FIRSTKAPPE ODER FIRSTBLOCK-FLIESE
TUILE DE BLOC D'EXTRÉMITÉ DE CRÊTE OU DE BLOC D'EXTRÉMITÉ DE CRÊTE

(30) Priority: 03.05.2023 GB 202306526
(43) Date of publication of application: 04.12.2024
(73) Proprietor: Manthorpe Building Products Limited, Ripley, Derbyshire DE5 3ND (GB)
(72) Inventor: WALKER, Daniel, Ripley, DE5 3ND (GB); CHALLINOR, Michael Cameron, Ripley, DE5 3ND (GB)
(74) Representative: Marks & Clerk LLP

(56) References cited:
- CN-A- 112 982 792
- CN-U- 211 499 206
- DE-A1- 10 200 642
- DE-A1- 19 651 054
- SE-L- 9 000 755

## Description

### FIELD

This invention relates to a ridge end cap or a ridge block end tile for covering an end of a ridge tile and providing a habitable space for birds, or mammals such as bats.

### BACKGROUND

Animals such as bats and birds require habitable spaces to live and roost/nest. Construction of residential, commercial and industrial buildings directly affects animal habitats and, inevitably, the biodiversity of an area. Habitable spaces can become limited and some animals find unsuitable and sometimes unsafe spaces to roost or nest. This is especially important for bats which do not construct roosts but use structures that are already available. Problems arise when bats roost in roof spaces, where they can become entangled in synthetic roof membranes, which ultimately trap them in the roof space. Similarly, birds sometimes nest in unsafe and inconvenient places, like chimneys, creating a hazard to the user of the chimney and to the bird. Thus, there is a drive to provide habitable spaces, which are incorporated into residential, commercial and industrial buildings, to maintain and encourage the presence of such small animals.

Previous efforts to incorporate habitable spaces into buildings have been cumbersome and expensive, meaning they are slow to be adopted. Dry verge systems are products used to clad and protect the exposed edge of the roof, covering up the line of the verge on the gable end of a building. The apex of a roof, where the two pitch roofs meet, at the top of the gable end and at the end of the ridge tiles there is a gap. A ridge end cap is a cover feature to cover an end of a ridge tiles and the top fixing plates of the dry verge units. An alternative is a ridge block end tile, which has a ridge tile portion with an integral end cap portion. The ridge end cap and the ridge block end tile are designed to protect the otherwise exposed opening of the ridge tile, preventing rain, birds or other unwanted material to enter. Prior art document 1 [DE 10200642 A1] discloses a storm-proof fastening system for tiles on a building roof which has clips at an upper end of tile engaging lath and further clips near a lower end engaging upper end of next tile down. Each tile is rectangular with roof-shaped long edges, designed to overlap. There are five clamps or hooks at the upper edge designed to engage a lath to hold the tile in place.

There are four further hooks near the lower edge which engage the upper edge of the next tile down, and thus prevent the lower edge of the tile lifting.

The present invention seeks to solve or mitigate at least some of the above-mentioned problems, other problems, or provide a useful alternative, by providing a ridge end cap that can provide an enclosed animal habitat whilst also providing protection to the opening of the ridge tile. The solution can be tailored to the specific building requirements and can be implemented easily and with little extra cost or training.

### SUMMARY OF INVENTION

A first aspect of the invention provides a ridge end cap or a ridge block end tile for covering an end of a ridge tile, according to claim 1.

Existing ridge end caps and ridge block end tiles sit flat against the gable end of a building and do not allow animal habitation. The cavity provides a safe and dry place for birds and mammals such as bats to nest or roost at an elevated position that is desirable. It also can be easily used on numerous buildings in an area; this is particularly important for bats which tend to have multiple roosting sites which they visit, rather than a single roost.

The opening gives the mammal or bird access to the cavity.

Preferably, the opening is at least about 8mm or about 12 mm or about 20 mm in its smallest dimension. For the avoidance of doubt, the "dimension" of the opening is the dimension measured across the opening rather than in its depth direction. Having this smallest dimension of at least about 20 mm may allow birds to pass through the opening. Preferably the smallest dimension of the opening is in the range of about 20 to about 32 mm. Openings in this range are recommended for the Blue Tit, Coal Tit, Marsh Tit, Great Tit, Tree sparrow, House Sparrow and Nuthatch. For example, the opening may be circular, and may have a diameter (and hence dimension) of about: 25mm, 28mm or 32mm.

The opening may be at least about 30 mm in its largest dimension. Having this largest dimension of at least about 30 mm and a smallest dimension of at least about 12 mm (for example, when the opening is rectangular) may allow bats to pass through the opening.

Preferably, the cavity is at least about 16 cm³ in volume.

These minimum dimensions of the opening and cavity help to ensure mammals or birds fit inside the ridge end cap.

The opening may be at most about 75 mm or about 50 mm in its largest width dimension. Some birds will not nest in cavities with openings that are too large because they allow larger species to enter the cavities. By limiting providing these maximum dimensions some smaller bird species are more likely to use the cavity.

Preferably, the ridge end cap or ridge block end tile is fixable to a building surface. The ridge end cap or ridge block end tile can be fitted to buildings of all types because the fixing is simple, therefore it is versatile for many different types of site.

Preferably, the opening is positioned on an outer surface of the ridge end cap or ridge block end tile, wherein the outer surface is not abutting a building surface in use.

Preferably, the opening is positioned on a bottom face of the ridge end cap or ridge block end tile such that in use the opening provides access vertically. This is the optimum arrangement for bats who like to enter a roost vertically.

Alternatively, the opening may be positioned on an in-use front face of the ridge end cap or ridge block end tile. This is the most convenient orientation for birds.

Preferably, the opening is substantially circular or substantially slot-shaped.

Preferably, the ridge end cap or ridge block end tile comprises a landing projection. The landing projection may be positioned adjacent to the opening. The landing projection is advantageous as it allows the mammal or bird to land on the ridge end cap or ridge block end tile before entering, thus allowing the bird or mammal to check that it is a safe and empty place to nest or roost. The landing projection may be in the form of a landing plate.

Preferably, the landing projection comprises a roughened or textured surface, or a surface provided with grip-enhancing projections. This helps the mammal or bird to grip and enhances the "natural" feel of the ridge end cap to encourage use.

Preferably, the ridge end cap or ridge block end tile further comprises a thermally insulating layer. The thermally insulating layer may surround the cavity. The insulating layer may be formed from a polymer material, wool or other synthetic or natural insulating materials Provision of a habitable space that maintains a steady temperature range would encourage birds and bats to nest or roost in such spaces. This is particularly advantageous for bats because bats allow their body temperatures to drop when they are not active, to conserve energy. Therefore, they are susceptible to extreme temperatures.

Preferably, the ridge end cap or ridge block end tile is made from a polymer. The ridge end cap or ridge block end tile is a low cost solution that can be produced using known manufacturing techniques. For example, it could be produced by injection moulding, but this is not essential, and it could be produced using other techniques.

Preferably, the ridge end cap or ridge block end tile is fixable to a surface using a fixing means. The fixing means may comprise at least one screw. The use of known fixing means allows the ridge end cap or ridge block end tile to be implemented easily and with little extra cost or training.

Preferably, the ridge end cap comprises a back plate and a cover fixable to the back plate. The cavity may be integrally formed in the covering plate or in the backing plate. Alternatively, the cavity may be a separate part to both the covering plate and the backing plate.

Preferably, the cavity comprises a roughened or textured inner surface, or a surface provided with grip-enhancing projections.

Preferably, the ridge end cap or ridge block end tile further comprises ledges and/or areas from which a bat can hang within the cavity.

Preferably, the cavity comprises a lining material. The lining material may be thermally insulating.

Preferably, the opening provides the only access for the mammal or bird to the cavity. Accordingly, the animal cannot, for example, move from the cavity to the roof space and become entangled in the roof membrane and/or cause a nuisance to the building owner.

The ridge end cap or ridge block end tile may have a projecting porch roof to restrict wind-driven rain. The porch roof may project from the in-use front face of the ridge end cap, and may be adjacent the opening. This is particularly advantageous when the opening is positioned on the in-use front face of the ridge end cap.

Another aspect of the present invention provides a computer readable medium having stored thereon computer executable instructions that, when executed by a processor, cause the processor to control an additive manufacturing device to manufacture the ridge end cap or ridge block end tile of the first aspect of the present invention.

Another aspect of the present invention provides a method of manufacturing a product via additive manufacturing, the method comprising obtaining an electronics file representing at least the surface configuration of the product, wherein the product is a ridge end cap or ridge block end tile according to the first aspect of the present invention; and controlling an additive manufacturing device to manufacture, over one or more additive manufacturing steps, the product according to the surface configuration specified in the electronic file.

### BRIEF DESCRIPTION OF FIGURES

Fig. 1 shows a perspective view of the exposed edge of the roof on the gable end of a building;
Fig. 2 shows a perspective view of a ridge end cap according to an embodiment of the invention;
Fig. 3 shows a side view the ridge end cap of Fig. 2;
Fig. 4 depicts a section view from looking from the side of the ridge end cap of Fig. 2;
Fig. 5 shows a perspective view of the ridge end cap of Fig. 2 in situ;
Fig. 6 shows a side view of a building showing the embodiment of Fig. 2 to Fig. 5 covering the exposed edge of the roof on the gable end of a building;
Fig. 7 shows a perspective view of a ridge end cap according to another embodiment of the invention;
Fig. 8 shows a side view of a ridge end cap according to the embodiment shown in Fig. 7;
Fig. 9 depicts a section view looking from the side of a ridge end cap according to the embodiment shown in Fig. 7 and Fig. 8;
Fig. 10 shows a perspective view of the ridge end cap according to the embodiment of Fig. 7 in situ;
Fig. 11 shows a front view of the ridge end cap according to the embodiment of Fig. 7 in situ;
Fig. 12 shows a side view of a building showing the embodiment of Fig. 5 to Fig. 7 covering the exposed edge of the roof on the gable end of a building;
Fig. 13 shows a perspective view of the gable end of a building with a ridge block end tile in situ according to another embodiment of the invention;
Fig. 14 depicts a perspective view of the ridge block end tile according to the embodiment of Fig. 13;
Fig. 15 illustrates a side view of the ridge block end tile according to the embodiment shown in Fig.13 and Fig. 14.

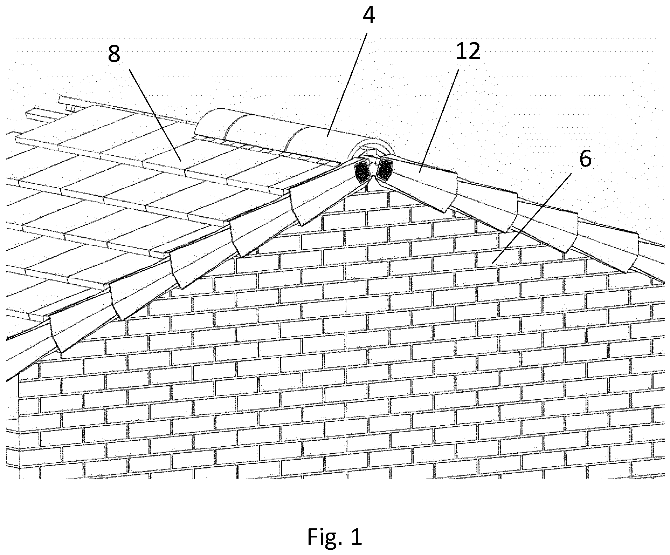

Referring to Fig. 1, the gable end 6 of a building is shown where two pitch roofs meet at the apex of the gable end. Dry verge units 12 are used to cover the exposed edges of the roof. As shown, the apex where the dry verge units 12 meet at the end of the ridge tiles 4 is exposed and uncovered.

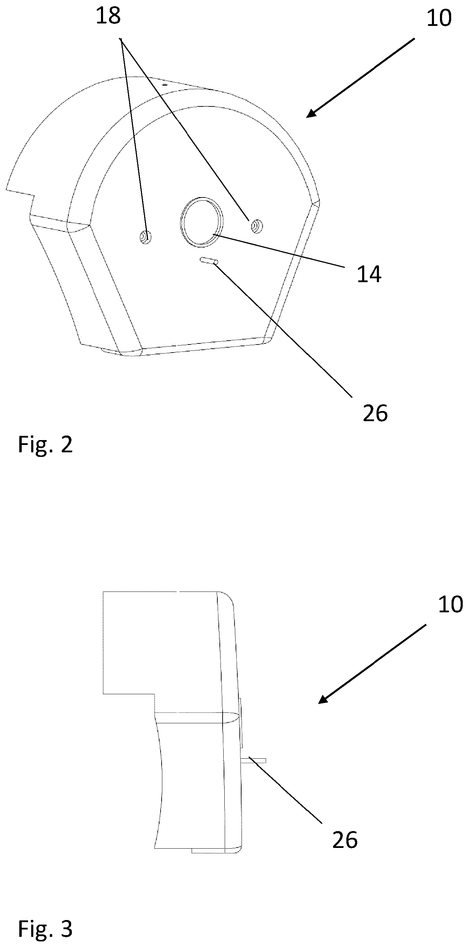

Fig. 2 shows a ridge end cap 10 for covering the opening at the apex of the roof and the end of the ridge tiles 4. The ridge end cap 10 comprises an animal habitat. The animal habitat is inside the ridge end cap 10. The habitat is suitable for small birds or small mammals such as bats. The ridge end cap 10 shown in Fig. 2 to Fig. 6 is particularly suitable for small birds. The ridge end cap 10 is fixable to the apex of the gable end 6 of the roof structure to cover an end of a ridge tile 4. The ridge end cap 10 protects the otherwise exposed opening of the ridge tile 4, preventing rain, birds or other unwanted material to enter the roof space.

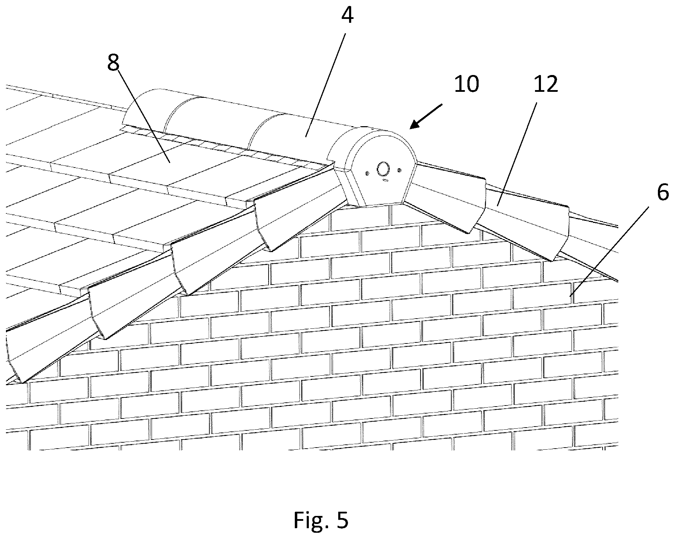

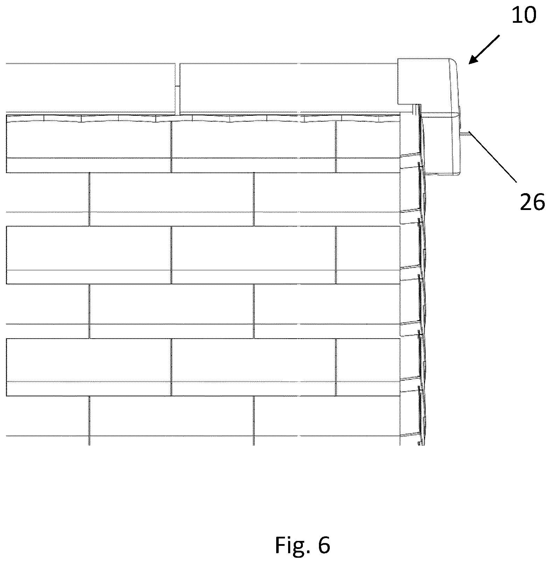

As shown in Fig. 2 the ridge end cap 10 comprises an approximately box shaped housing rather than a flat covering. As shown the ridge end cap 10 has a rounded top surface to mate with the ridge tile 4 that covers the intersection of the two sloping flat roof tiles 8. As shown in Fig. 5 and Fig. 6, the ridge end cap 10 projects from the gable end of the building. This allows space for an internal cavity 16 and thereby allows for the animal habitat. The ridge end cap has a front face that lies approximately parallel to the gable end 6 of a building in use. The back face of the ridge end cap 10 is configured to abut the building surface in use. The back face of the ridge end cap 10 is in an approximately parallel plane to, and is offset from, the front face. The bottom face faces the ground in use and connects the front and back faces, lying in a perpendicular plane to both.

The ridge end cap 10 comprises an opening 14. The opening 14 is positioned on one of the faces of the ridge end cap that is exposed when the ridge end cap 10 is in position on the roof structure or building. Preferably, the opening is on the front or bottom face of the ridge end cap 10. Alternatively, the opening may be positioned at the sides of the ridge end cap 10.

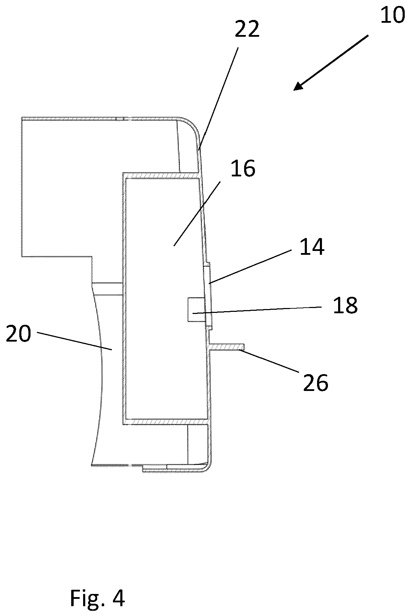

As shown in Fig. 2, in the present embodiment, the opening 14 is on the front face of the ridge end cap 10. As shown the opening 14 is positioned approximately centrally on the front face. The opening 14 provides access to an internal cavity 16, shown in Fig. 4. It will be appreciated that the opening could be at any position on the front face that provides access to the cavity 16. The opening 14 is circular. The opening 14 is at least 20 mm in diameter. Alternatively, the opening may be a different shape, for example square or triangular having a minimum width and/or height of 20 mm.

Fig. 4 shows a cross section of the ridge end cap 10 where the internal structure can be viewed. The cavity 16 is suitable for a bird to nest. The cavity 16 is at least 16 cm³ in volume. This provides adequate space for small birds to nest. The cavity 16 is accessible via opening 14.

The ridge end cap 10 comprises one or more fastening holes 18 suitable for receiving a screw or nail (not shown) so that the ridge end cap 10 can be secured to a surface. In this way, a nail or screw can be passed through the hole from the front (or outer) face of the ridge end cap 10 to the back face of the ridge end cap 10 and into a structural element of the building, such as a timber roofing batten. The at least one fastening hole 18 extends through the ridge end cap 10. The fastening hole 18 is predrilled for ease of use, although in some embodiments the fastening hole 18 can be drilled on site. In Fig. 2 two fastening holes 18 are provided, positioned either side of the opening 14. Where two fastening holes 18 are used, they are aligned horizontally in use so that the ridge end cap 10 can be easily positioned and aligned with the angle of the roof. Although fastening holes 18 for screws are shown, it will be understood that alternative suitable fixing means could be used. The ridge end cap 10 is affixed to the building using the known techniques. Therefore, it can be adopted with ease and no need for additional skills or training.

The ridge end cap 10 comprises two parts. The ridge end cap 10 comprises a backing plate 20 and a covering plate 22. The backing plate 20 and covering plate 22 are connected. The backing plate 20 and covering plate 22 comprise connecting means (not shown) which allow connection of the two plates 20, 22. In some embodiments, the backing plate 20 and the covering plate 22 are snap-fitted together. Alternatively, the backing plate 20 and the covering plate 22 may be connected using other mechanical fixing, adhesive, polymer welding or other suitable means. In some embodiments, the backing plate 20 and covering plate 22 together define the cavity 16 when connected. Alternatively, the cavity 16 is already integrally formed in the covering plate 22 or in the backing plate 20. In some embodiments, the ridge end cap 10 comprises three or more parts where, for example, the cavity 16 is a separate part to both the covering plate 22 and the backing plate 20. The cavity 16 of some embodiments is a separately formed hollow enclosure with an opening, configured to fit within the backing plate 20 and covering plate 22 when connected.

A landing projection 26 is also provided on the ridge end cap 10 shown in Fig. 2 to Fig. 5. The landing projection 26 protrudes from the front face of the ridge end cap 10. The landing projection 26 protrudes from a position adjacent to the opening 14. This provides a landing point for a small bird so that it may then enter or leave the cavity 16 easily. Alternatively or additionally, the ridge end cap 10 comprises a ledge and/or perch on an outer surface of the ridge end cap 10. Additionally or alternatively, the ridge end cap comprises a porch roof positioned over the opening 14 such that in use it shields the opening 14 from rainwater.

Fig. 5 depicts the ridge end cap 10 in situ on a roof structure. As shown the ridge end cap 10 has a rounded top surface to mate with the ridge tile 4 that covers the intersection of the two sloping flat roof tiles 8. As shown in Fig. 6, the ridge end cap 10 projects from the gable end of the building providing space for the internal cavity 16 and consequently for the animal habitat.

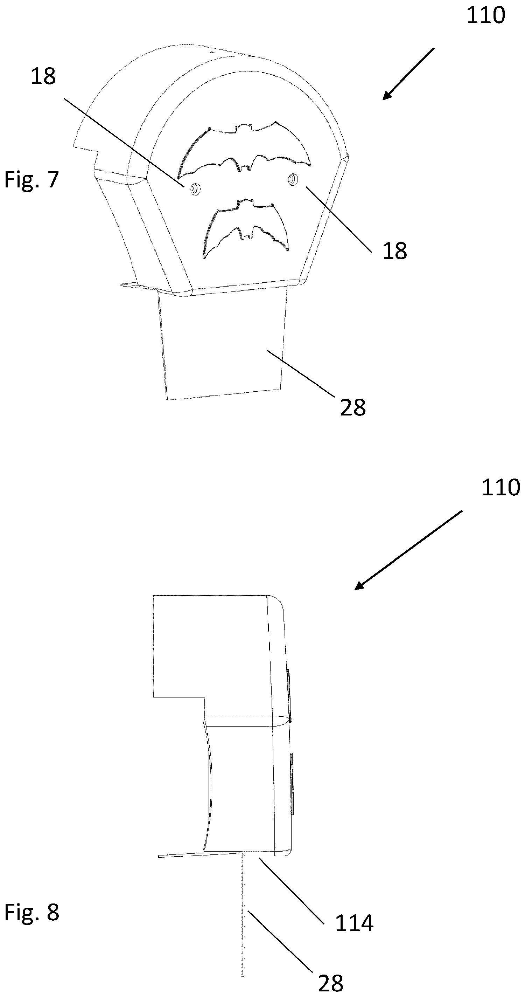

Fig. 7 shows a ridge end cap 110 of another embodiment of the invention. The ridge end cap 110 comprises an opening 114 on its bottom face. The bottom face of the ridge end cap 110 is the surface that faces the ground in use. The opening 114 is slot shaped.

The ridge end cap 110 of Fig. 7 comprises a landing projection 28 in the form of a landing plate 28. The landing plate 28 is positioned adjacent to the opening 114. The landing plate 28 is positioned on the lower surface of the ridge end cap 110 and projects from the lower surface of the ridge end cap 110. The landing plate 28 provides a surface for a bat to grip on to. Using the landing plate 28 a bat can crawl up the landing plate 28 to the opening 114 and into the cavity 16. In some embodiments, the landing plate 28 comprises a roughened or textured surface. Additionally or alternatively, the surface of the landing plate 28 has a sand granulation effect applied to it. Such surfaces aid the bat's grip to the surface. Similarly, the landing projection 28 and cavity shown in Fig. 2 to Fig 5 can also comprise a roughened and or textured surface, or have a sand granulation effect applied to one or both.

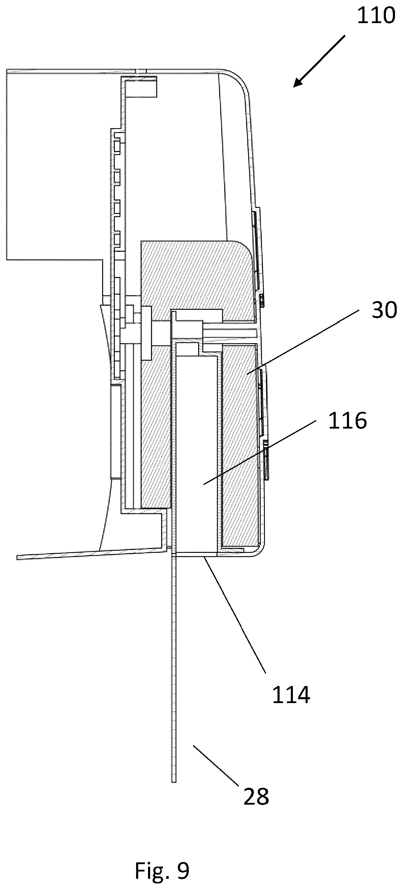

Fig. 9 shows a cross section of the ridge end cap 110. The opening 114 provides access to an internal cavity 116. The cavity 116 has a volume of at least 16 cm³. In some embodiments, the cavity 116 comprises a roughened or textured inner surface.

Additionally or alternatively, there are ledges and/or areas from which a bat can hang within the cavity 116.

The ridge end cap 110 further comprises an insulation layer 30. The insulation layer 30 is provided inside the ridge end cap 110 and around the outside of the cavity 116. The insulation layer 30 prevents extreme temperature changes inside the cavity 116 due to external weather conditions. This is especially important for bats because bats allow their body temperatures to drop when they are not active, to conserve energy. Therefore, they are susceptible to extreme temperatures. Provision of a habitable space that maintains a steady temperature range would encourage bats to roost in such spaces. The insulation layer is formed from a polymer material. Alternatively, the insulation layer can be wool or other synthetic or natural insulating materials.

In some embodiments, the cavity 116 also comprises a lining (not shown). The lining is a polymer based material and provides further insulation to the cavity 16. Alternatively, the lining is any other suitable material.

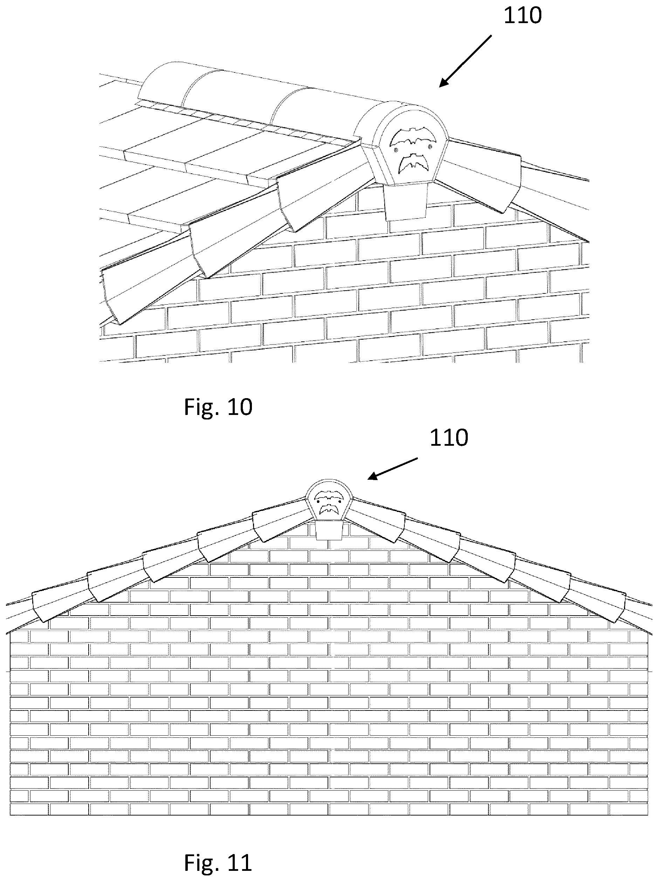

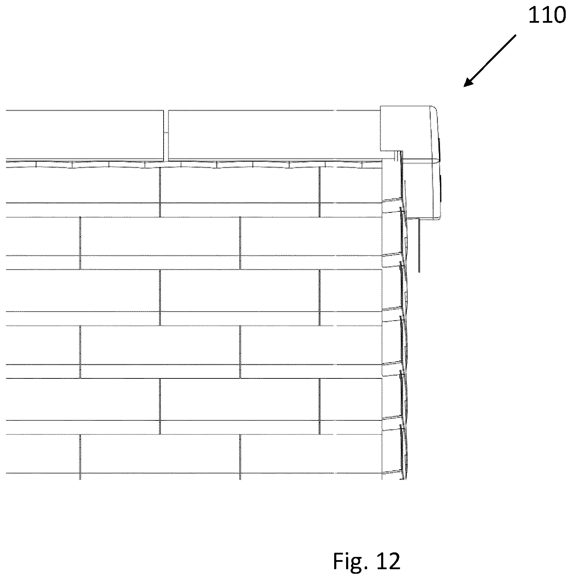

Fig. 10, Fig. 11 and Fig. 12 show the ridge end cap 110 in position on the roof structure. As shown, in some embodiments the ridge end cap 110 comprises an image of a bat to indicate to a user the type of ridge end cap 110 it is.

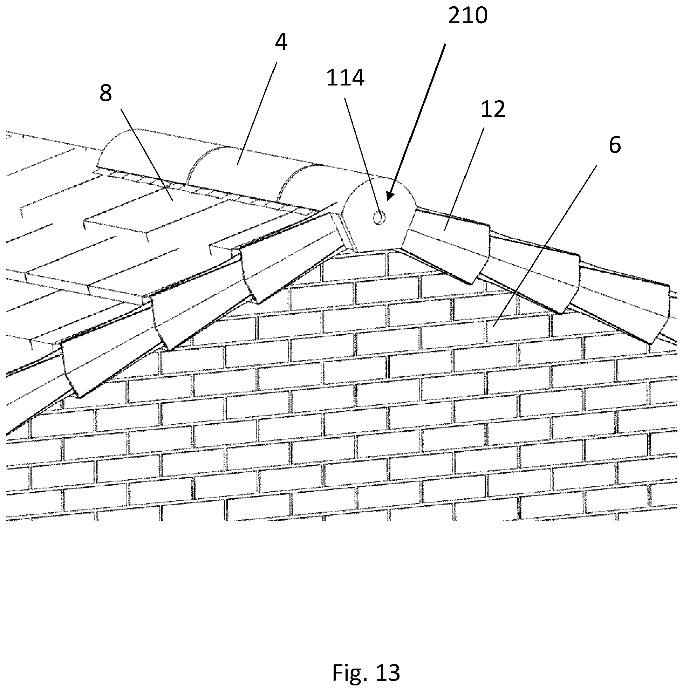

Fig. 13 shows a ridge block end tile 210 of another embodiment of the invention. The ridge block end tile 210 covers the opening at the apex of the roof and an end of a ridge tile 4. The ridge block end tile 210 comprises an animal habitat. Although the features of the animal habitat have been described primarily in relation to the ridge end cap 10, 110, it will be understood that the features of the animal habitat described in relation to the ridge end cap 10, 110 can also be included in the ridge block end tile 210.

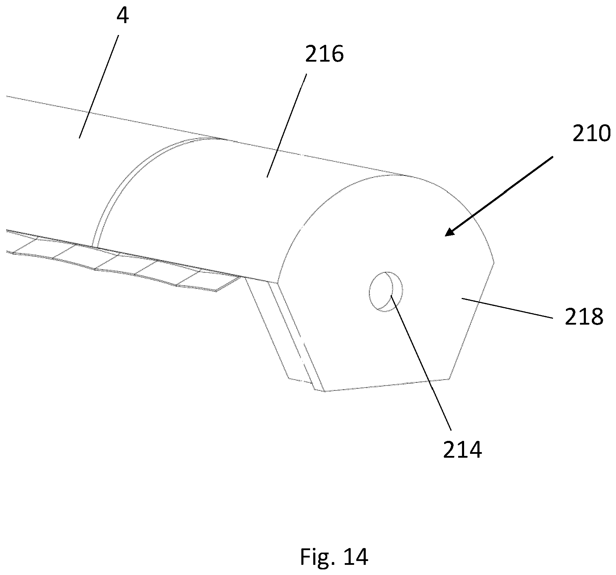

As shown in Fig. 14, the ridge block end tile 210 has a ridge tile portion 216 integrally formed with an end cap portion 218. Within the end cap portion 218 of the ridge block end tile 210 there is a cavity (not shown) accessible via opening 214.

The ridge block end tile 210 of Fig. 13 is configured to provide an opening and cavity suitable for a bird and comprises the features of the cavity and opening described in relation to Fig. 2 to Fig. 6. As shown, the ridge block end tile 210 in Fig. 13 has a circular opening 214 positioned centrally relative to its front (or outer) face.

In some embodiments (not shown) the ridge block end tile is configured to provide an opening and a cavity suitable for a bat and comprises the features of the opening and cavity described in relation to Fig. 7 to Fig. 12. The ridge block end tile comprises an opening on a lower face configured such that in use the opening provides access vertically.

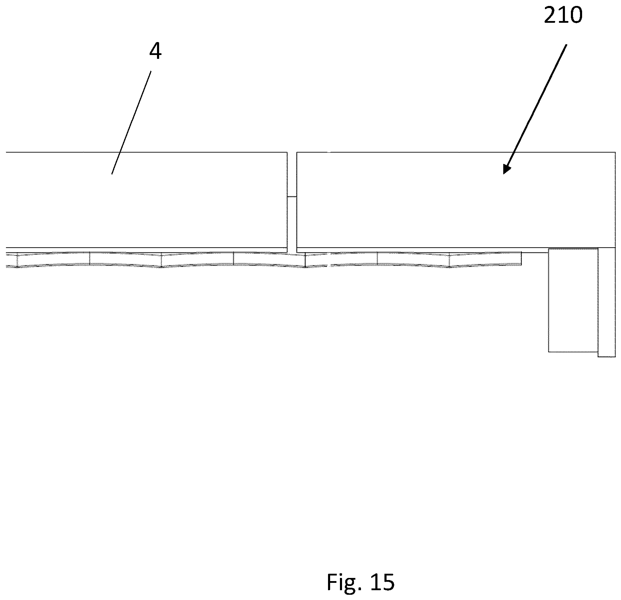

The ridge tile portion 216 sits astride the apex of the roof like a ridge tile 4 and the end cap portion 218 is configured to be positioned at a gable end 6 of the roof apex. The end cap portion 218 covers an opening at the gable end 6 in the same way as the ridge end cap 10, 110. The ridge block end tile 210 and an adjacent ridge tile 4 sit side by side as shown in Fig. 15. The ridge tile portion 216 is connectable to an adjacent ridge tile 4.

As described in relation to the ridge end cap 10, 110 the ridge block end tile 210 is fixable to a surface using fastening holes (not shown) for screws or other alternative suitable fixing means. The ridge block end tile 210 is affixed to the building using the known techniques. Therefore, it can be adopted with ease and no need for additional skills or training.

The ridge end cap 10, 110 of the embodiments shown in Figs. 1 to 12 sits on top of the end of the ridge tile 4 to which it is adjacent. However, this is not essential, and in a different embodiment the ridge end cap may sit next to, but not on top of, the end of the adjacent ridge tile 4. In that case, the ridge end cap may be attached to the adjacent ridge tile 4.

The present invention has been described above purely by way of example. Modifications in detail may be made to the present invention within the scope of the claims as appended hereto.

## Claims

1. A ridge end cap (10, 110) or a ridge block end tile (210) for covering an end of a ridge tile (4), comprising:
a cavity (16, 116) for providing a habitat for a mammal or bird; and
an opening (14, 114, 214) for providing access for a mammal or bird from outside the ridge end cap (10, 110) or ridge block end tile (210) to the cavity (16, 116).

2. The ridge end cap (10, 110) or ridge block end tile (210) of claim 1 wherein the cavity (16, 116) is at least about 16 cm³ in volume.

3. The ridge end cap (10, 110) or ridge block end tile (210) of any preceding claim wherein the opening (14, 114, 214) is positioned on an outer surface of the ridge end cap (10, 110) or ridge block end tile (210), wherein the outer surface is one which is exposed when the ridge end cap (10, 110) or ridge block end tile (210) is in position on a building surface when in use.

4. The ridge end cap (10, 110) or ridge block end tile (210) of any preceding claim wherein the opening (114) is positioned on a bottom face of the ridge end cap (10, 110) or ridge block end tile (210) such that in use the opening (114) provides access vertically.

5. The ridge end cap (10, 110) or ridge block end tile (210) of any preceding claim wherein the opening (14, 114, 214) is substantially circular or substantially slot-shaped.

6. The ridge end cap (10, 110) or ridge block end tile (210) of any preceding claim wherein the ridge end cap (10, 110) or ridge block end tile (210) comprises a landing projection (28),
optionally wherein the landing projection (28) is positioned adjacent to the opening (114),
optionally wherein the landing projection (28) is in the form of a landing plate (28),
optionally wherein the landing projection (28) comprises a roughened or textured surface, or a surface provided with grip-enhancing projections.

7. The ridge end cap (10, 110) or ridge block end tile (210) of any preceding claim further comprising a thermally insulating layer (30),
optionally wherein the thermally insulating layer (30) surrounds the cavity (16, 116),
optionally wherein the insulating layer (30) is formed from a polymer material or wool.

8. The ridge end cap (10, 110) or ridge block end tile (210) of any preceding claim wherein the ridge end cap (10, 110) or ridge block end tile (210) is made from a polymer.

9. The ridge end cap (10, 110) or ridge block end tile (210) of any preceding claim wherein the ridge end cap (10, 110) comprises a back plate and a cover fixable to the back plate.

10. The ridge end cap (10, 110) or ridge block end tile (210) of any preceding claim wherein the cavity (16, 116) comprises a roughened or textured inner surface, or a surface provided with grip-enhancing projections.

11. The ridge end cap (10, 110) or ridge block end tile (210) of any preceding claim further comprising ledges and/or areas from which a bat can hang within the cavity (16, 116).

12. The ridge end cap (10, 110) or ridge block end tile (210) of any preceding claim wherein the cavity (16, 116) comprises a lining material.

13. The ridge end cap (10, 110) or ridge block end tile (210) of any preceding claim wherein the opening (14, 114, 214) provides the only access for the mammal or bird from outside the ridge end cap (10, 110) or ridge block end tile (210) to the cavity (16, 116).

14. A computer readable medium having stored thereon computer executable instructions that, when executed by a processor, cause the processor to control an additive manufacturing device to manufacture the ridge end cap (10, 110) or ridge block end tile (210) of any preceding claim.

15. A method of manufacturing a product via additive manufacturing, the method comprising:
obtaining an electronic file representing at least the surface configuration of the product, wherein the product is a ridge end cap (10, 110) or ridge block end tile (210) according to any one of claim 1 to claim 13; and
controlling an additive manufacturing device to manufacture, over one or more additive manufacturing steps, the product according to the surface configuration specified in the electronic file.

## Patentansprüche

1. Firstkappe (10, 110) oder Firstblock-Fliese (210) zum Abdecken eines Endes eines Firstziegels (4), umfassend:
einen Hohlraum (16, 116) zum Bereitstellen eines Lebensraums für ein Säugetier oder einen Vogel; und
eine Öffnung (14, 114, 214), die einem Säugetier oder Vogel den Zugang von außerhalb der Firstkappe (10, 110) oder der Firstblock-Fliese (210) zu dem Hohlraum (16, 116) bereitstellt.

2. Firstkappe (10, 110) oder Firstblock-Fliese (210) nach Anspruch 1, wobei der Hohlraum (16, 116) ein Volumen von mindestens etwa 16 cm³ hat.

3. Firstkappe (10, 110) oder Firstblock-Fliese (210) nach einem der vorstehenden Ansprüche, wobei die Öffnung (14, 114, 214) auf einer Außenfläche der Firstkappe (10, 110) oder Firstblock-Fliese (210) angeordnet ist, wobei die Außenfläche eine solche ist, die sichtbar ist, wenn sich die Firstkappe (10, 110) oder Firstblock-Fliese (210) im Gebrauch in einer Position auf einer Gebäudeoberfläche befindet.

4. Firstkappe (10, 110) oder Firstblock-Fliese (210) nach einem der vorstehenden Ansprüche, wobei die Öffnung (114) auf einer Unterseite der Firstkappe (10, 110) oder Firstblock-Fliese (210) so positioniert ist, dass die Öffnung (114) im Gebrauch einen vertikalen Zugang bereitstellt.

5. Firstkappe (10, 110) oder Firstblock-Fliese (210) nach einem der vorstehenden Ansprüche, wobei die Öffnung (14, 114, 214) im Wesentlichen kreisförmig oder im Wesentlichen schlitzförmig ist.

6. Firstkappe (10, 110) oder Firstblock-Fliese (210) nach einem der vorstehenden Ansprüche, wobei die Firstkappe (10, 110) oder Firstblock-Fliese (210) einen Landevorsprung (28) umfasst,
optional wobei der Landevorsprung (28) neben der Öffnung (114) positioniert ist,
optional wobei der Landevorsprung (28) die Form einer Landeplatte (28) hat,
optional wobei der Landevorsprung (28) eine aufgeraute oder strukturierte Oberfläche oder eine mit Griffverbesserungsnoppen bereitgestellte Oberfläche umfasst.

7. Firstkappe (10, 110) oder Firstblock-Fliese (210) nach einem der vorstehenden Ansprüche, weiter umfassend eine wärmeisolierende Schicht (30),
optional wobei die wärmeisolierende Schicht (30) den Hohlraum (16, 116) umschließt,
optional wobei die Isolierschicht (30) aus einem Polymermaterial oder Wolle gebildet ist.

8. Firstkappe (10, 110) oder Firstblock-Fliese (210) nach einem der vorstehenden Ansprüche, wobei die Firstkappe (10, 110) oder Firstblock-Fliese (210) aus einem Polymer hergestellt ist.

9. Firstkappe (10, 110) oder Firstblock-Fliese (210) nach einem der vorstehenden Ansprüche, wobei die Firstkappe (10, 110) eine Rückplatte und eine an der Rückplatte befestigbare Abdeckung umfasst.

10. Firstkappe (10, 110) oder Firstblock-Fliese (210) nach einem der vorstehenden Ansprüche, wobei der Hohlraum (16, 116) eine aufgeraute oder strukturierte Innenfläche oder eine mit Griffverbesserungsnoppen bereitgestellte Oberfläche umfasst.

11. Firstkappe (10, 110) oder Firstblock-Fliese (210) nach einem der vorstehenden Ansprüche, weiter umfassend Leisten und/oder Bereiche, an denen eine Fledermaus innerhalb des Hohlraums (16, 116) hängen kann.

12. Firstkappe (10, 110) oder Firstblock-Fliese (210) nach einem der vorstehenden Ansprüche, wobei der Hohlraum (16, 116) ein Auskleidungsmaterial umfasst.

13. Firstkappe (10, 110) oder Firstblock-Fliese (210) nach einem der vorstehenden Ansprüche, wobei die Öffnung (14, 114, 214) den einzigen Zugang für das Säugetier oder den Vogel von außerhalb der Firstkappe (10, 110) oder Firstblock-Fliese (210) zu dem Hohlraum (16, 116) bereitstellt.

14. Computerlesbares Medium, auf dem computerausführbare Anweisungen gespeichert sind, die, wenn sie von einem Prozessor ausgeführt werden, den Prozessor veranlassen, eine additive Fertigungsvorrichtung zu steuern, um die Firstkappe (10, 110) oder die Firstblock-Fliese (210) nach einem der vorstehenden Ansprüche herzustellen.

15. Verfahren zum Herstellen eines Produkts mittels additiver Fertigung, wobei das Verfahren Folgendes umfasst:
Erhalten einer elektronischen Datei, die zumindest die Oberflächenkonfiguration des Produkts darstellt, wobei es sich bei dem Produkt um eine Firstkappe (10, 110) oder eine Firstblock-Fliese (210) nach einem der Ansprüche 1 bis 13 handelt; und
Steuern einer additiven Fertigungsvorrichtung zum Herstellen des Produkts in einem oder mehreren additiven Fertigungsschritten gemäß der in der elektronischen Datei festgelegten Oberflächenkonfiguration.

## Revendications

1. Capuchon d'extrémité de crête (10, 110) ou tuile d'extrémité de bloc de crête (210) pour recouvrir une extrémité d'une tuile de crête (4), comprenant :
une cavité (16, 116) pour fournir un habitat à un mammifère ou à un oiseau ; et
une ouverture (14, 114, 214) pour fournir un accès pour un mammifère ou un oiseau à la cavité (16, 116) depuis l'extérieur du capuchon d'extrémité de crête (10, 110) ou de la tuile d'extrémité de bloc de crête (210).

2. Capuchon d'extrémité de crête (10, 110) ou tuile d'extrémité de bloc de crête (210) selon la revendication 1, dans lequel la cavité (16, 116) présente un volume d'au moins environ 16 cm³.

3. Capuchon d'extrémité de crête (10, 110) ou tuile d'extrémité de bloc de crête (210) selon une quelconque revendication précédente, dans lequel l'ouverture (14, 114, 214) est positionnée sur une surface externe du capuchon d'extrémité de crête (10, 110) ou de la tuile d'extrémité de bloc de crête (210), dans lequel la surface externe est celle qui est exposée lorsque le capuchon d'extrémité de crête (10, 110) ou la tuile d'extrémité de bloc de crête (210) est en position sur une surface de bâtiment lorsqu'il est utilisé.

4. Capuchon d'extrémité de crête (10, 110) ou tuile d'extrémité de bloc de crête (210) selon une quelconque revendication précédente, dans lequel l'ouverture (114) est positionnée sur une face inférieure du capuchon d'extrémité de crête (10, 110) ou de la tuile d'extrémité de bloc de crête (210) de telle sorte qu'en utilisation, l'ouverture (114) assure un accès vertical.

5. Capuchon d'extrémité de crête (10, 110) ou tuile d'extrémité de bloc de crête (210) selon une quelconque revendication précédente, dans lequel l'ouverture (14, 114, 214) est sensiblement circulaire ou sensiblement en forme de fente.

6. Capuchon d'extrémité de crête (10, 110) ou tuile d'extrémité de bloc de crête (210) selon une quelconque revendication précédente, dans lequel le capuchon d'extrémité de crête (10, 110) ou la tuile d'extrémité de bloc de crête (210) comprend une projection d'atterrissage (28),
facultativement dans lequel la projection d'atterrissage (28) est positionnée de manière adjacente à l'ouverture (114),
facultativement dans lequel la projection d'atterrissage (28) est sous la forme d'une plaque d'atterrissage (28),
facultativement dans lequel la projection d'atterrissage (28) comprend une surface rugueuse ou texturée, ou une surface munie de projections améliorant l'adhérence.

7. Capuchon d'extrémité de crête (10, 110) ou tuile d'extrémité de bloc de crête (210) selon une quelconque revendication précédente, comprenant en outre une couche thermo-isolante (30),
facultativement dans lequel la couche thermo-isolante (30) entoure la cavité (16, 116),
facultativement dans lequel la couche isolante (30) est formée d'un matériau polymère ou de laine.

8. Capuchon d'extrémité de crête (10, 110) ou tuile d'extrémité de bloc de crête (210) selon une quelconque revendication précédente, dans lequel le capuchon d'extrémité de crête (10, 110) ou la tuile d'extrémité de bloc de crête (210) est composé d'un polymère.

9. Capuchon d'extrémité de crête (10, 110) ou tuile d'extrémité de bloc de crête (210) selon une quelconque revendication précédente, dans lequel le capuchon d'extrémité de crête (10, 110) comprend une plaque arrière et un couvercle pouvant être fixé à la plaque arrière.

10. Capuchon d'extrémité de crête (10, 110) ou tuile d'extrémité de bloc de crête (210) selon une quelconque revendication précédente, dans lequel la cavité (16, 116) comprend une surface interne rugueuse ou texturée, ou une surface munie de projections améliorant l'adhérence.

11. Capuchon d'extrémité de crête (10, 110) ou tuile d'extrémité de bloc de crête (210) selon une quelconque revendication précédente, comprenant en outre des corniches et/ou des zones à partir desquelles une chauve-souris peut s'accrocher à l'intérieur de la cavité (16, 116).

12. Capuchon d'extrémité de crête (10, 110) ou tuile d'extrémité de bloc de crête (210) selon une quelconque revendication précédente, dans lequel la cavité (16, 116) comprend un matériau de revêtement.

13. Capuchon d'extrémité de crête (10, 110) ou tuile d'extrémité de bloc de crête (210) selon une quelconque revendication précédente, dans lequel l'ouverture (14, 114, 214) fournit le seul accès à la cavité (16, 116) pour le mammifère ou l'oiseau depuis l'extérieur du capuchon d'extrémité de crête (10, 110) ou de la tuile d'extrémité de bloc de crête (210).

14. Support lisible par ordinateur sur lequel sont stockées des instructions exécutables par ordinateur qui, lorsqu'elles sont exécutées par un processeur, amènent le processeur à commander un dispositif de fabrication additive pour fabriquer le capuchon d'extrémité de crête (10, 110) ou la tuile d'extrémité de bloc de crête (210) selon une quelconque revendication précédente.

15. Procédé de fabrication d'un produit par fabrication additive, le procédé comprenant :
l'obtention d'un fichier électronique représentant au moins la configuration de surface du produit, dans lequel le produit est un capuchon d'extrémité de crête (10, 110) ou une tuile d'extrémité de bloc de crête (210) selon l'une quelconque de la revendication 1 à la revendication 13 ; et
la commande d'un dispositif de fabrication additive pour fabriquer, en une ou plusieurs étapes de fabrication additive, le produit selon la configuration de surface spécifiée dans le fichier électronique.
